Europäisches Patentamt

European Patent Office

Office européen des brevets

(11) Veröffentlichungsnummer: **0 309 897 B1**

(19)

(12) **EUROPÄISCHE PATENTSCHRIFT**

(45) Veröffentlichungstag der Patentschrift: **26.01.94**

(21) Anmeldenummer: **88115527.9**

(22) Anmeldetag: **22.09.88**

(51) Int. Cl.⁵: **C08F 210/02**, C10M 145/08,
//(C08F210/02,218:04)

(54) **Copolymerisate aus Ethylen und Methoxiessigsäurevinylester und ihre Verwendung als Additive für Mineralöldestillate.**

(30) Priorität: **29.09.87 DE 3732721**

(43) Veröffentlichungstag der Anmeldung:
**05.04.89 Patentblatt 89/14**

(45) Bekanntmachung des Hinweises auf die
Patenterteilung:
**26.01.94 Patentblatt 94/04**

(84) Benannte Vertragsstaaten:
**BE DE FR GB IT NL**

(56) Entgegenhaltungen:
**EP-A- 0 061 696**
**EP-A- 0 084 148**
**EP-A- 0 217 602**
**FR-A- 2 280 656**
**GB-A- 2 155 944**

(73) Patentinhaber: **HOECHST AKTIENGESELL-SCHAFT**

**D-65926 Frankfurt(DE)**

(72) Erfinder: **Payer, Wolfgang, Dr. Dipl.-Chem.**
**Zedernweg 58**
**D-4230 Wesel 1(DE)**
Erfinder: **Bühnen, Heinz Dieter, Dipl,-Ing.**
**Kappellenstrasse 56**
**D-4200 Oberhausen 12(DE)**
Erfinder: **Zoller, Wilhelm, Dr. Dipl,-Chem.**
**Im Torfveen 26**
**D-4200 Oberhausen 11(DE)**

EP 0 309 897 B1

**Beschreibung**

Die vorliegende Erfindung betrifft Copolymerisate aus Ethylen und Methoxiessigsäurevinylester mit einer mittleren Molmasse von 500 bis 10.000 g x Mol$^{-1}$. Sie werden mit Erfolg zur Verbesserung der Fließfähigkeit von Mineralölen und Mineralöldestillaten eingesetzt.

Rohöle und durch Destillation von Rohölen gewonnene Mitteldestillate wie Gasöl, Dieselöl oder Heizöl enthalten je nach Herkunft der Rohole unterschiedliche Mengen langkettiger Paraffine (Wachse) gelöst. Bei niedrigen Temperaturen scheiden sich diese Paraffine als plättchenförmige Kristalle ab, teilweise unter Einschluß von Öl. Hierdurch wird die Fließfähigkeit der Rohöle und der aus ihnen gewonnenen Destillate erheblich beeinträchtigt. Es treten Feststoffablagerungen auf, die häufig zu Störungen bei Gewinnung, Transport und Einsatz der Mineralölprodukte führen. So kommt es in der kalten Jahreszeit z.B. bei Dieselmotoren und Feuerungsanlagen zu Verstopfungen der Filter, die eine sichere Dosierung der Brennstoffe verhindern und schließlich in einer Unterbrechung der Kraftstoff- bzw. Heizmittelzufuhr resultieren. Auch das Fördern der Mitteldestillate durch Rohrleitungen über größere Entfernungen kann im Winter durch das Ausfallen von Paraffinkristallen beeinträchtigt werden.

Es ist bekannt, das unerwünschte Kristallwachstum durch geeignete Zusätze zu unterbinden und damit einem Anstieg der Viskosität der Öle entgegenzuwirken. Solche Zusätze, sie sind unter der Bezeichnung Stockpunktverbesserer bzw. Fließverbesserer bekannt, verändern Größe und Form der Wachskristalle und wirken damit einem Anstieg der Viskosität der Öle entgegen.

Das Fließ- und Kälteverhalten von Mineralölen und Mineralöldestillaten wird durch Angabe des Pour-Points (bestimmt nach DIN 51597) und des Cold-Filter-Plugging-Points (CFPP; bestimmt nach DIN 51 428) beschrieben. Beide Kenngrößen werden in °C gemessen.

Typische Fließverbesserer für Rohöl und Mitteldestillate sind Copolymerisate des Ethylens mit Carbonsäureestern des Vinylalkohols. So setzt man nach der DE 11 47 799 B1 Erdöldestillat-Treib- bzw. -Brennstoffen mit einem Siedebereich zwischen etwa 120 und 400°C öllösliche Mischpolymerisate aus Ethylen und Vinylacetat mit einem Molekulargewicht zwischen etwa 1.000 und 3.000 zu. Als besonders geeignet haben sich Mischpolymerisate erwiesen, die etwa 60 bis 99 Gew.-% Ethylen und etwa 1 bis 40 Gew.-% Vinylacetat enthalten.

Weiterhin ist bekannt, daß solche Copolymerisate der genannten qualitativen Zusammensetzung besonders wirksam sind, die durch radikalische Polymerisation in einem inerten Lösungsmittel bei Temperaturen von etwa 70 bis 130°C und Drücken von 35 bis 2.100 atü hergestellt wurden (DE 19 14 756 B2).

Gegenstand der DE 21 02 469 C2 ist die Verwendung von Ethylen-Copolymerisaten mit einem Molekulargewicht von 500 bis 4.500 und einem Comonomerengehalt von 30 bis 75 Gew.-%. Sie werden erhalten durch gemeinsame Polymerisation von Ethylen und Vinylestern mit 4 bis 10 Kohlenstoffatomen, sowie Acrylsäure- und Methacrylsäureester, die sich von Alkoholen mit 1 bis 12 Kohlenstoffatomen ableiten, unter Ausschluß von Lösungs- und Emulgiermitteln.

Die Wirksamkeit der bekannten Zusatzstoffe zur Verbesserung der Eigenschaften von Mineralölfraktionen ist abhängig von der Herkunft des Mineralöls aus dem sie gewonnen wurden und damit von dessen Zusammensetzung. Additive, die zur Einstellung bestimmter Eigenschaftswerte von Fraktionen eines Rohöls hervorragend geeignet sind, können bei Destillaten von Rohölen anderen Ursprungs zu völlig unbefriedigenden Ergebnissen führen.

Aus wirtschaftlichen Erwägungen ist man daran interessiert, die Ausbeute an Mitteldestillat-Brenn- und Treibstoffen zu erhöhen. Ein Weg, dieses Ziel zu erreichen, ist der Zusatz von höheren Anteilen schweren Gasöls zu Mitteldestillatabmischungen. Eine weitere Möglichkeit, die Mitteldestillatausbeute zu verbessern, besteht darin, das Siedeintervall zu vergrößern, also Mitteldestillatfraktionen abzutrennen, deren Siedeende oberhalb 370°C liegt. Beide Verfahren haben einen Anstieg des höhermolekularen n-Paraffinanteils in dem Mitteldestillat-Brenn- bzw. Treibstoff zur Folge.

Die bekannten Zusätze wie Copolymerisat aus Ethylen und Vinylacetat führen in Mitteldestillatfraktionen mit einem Siedeende oberhalb 370°C nur zu einer unbefriedigenden Verbesserung der Fließfähigkeit.

Es bestand daher die Aufgabe Additive bereitzustellen, die die Fließfähigkeit von Erdölfraktionen mit einem Siedeende oberhalb 370°C verbessern.

Gegenstand der Erfindung sind Copolymerisate aus 95 bis 50 Gew.-% Ethylen-Einheiten und 5 bis 50 Gew.-% Methoxiessigsäurevinylester-Einheiten mit einer mittleren Molmasse ($M_n$) von 500 bis 10.000 g x Mol$^{-1}$.

Ein weiterer Gegenstand der Erfindung ist die Verwendung der vorstehend beschriebenen Copolymerisate zur Verbesserung der Fließfähigkeit von Mineralöldestillaten.

Überraschenderweise haben sich die Copolymerisate der Erfindung hervorragend zur Verbesserung der Fließfähigkeit von Mineralöldestillaten bewährt. Besonders hervorzuheben ist ihre breite Anwendbarkeit, d.h.

ihre Wirksamkeit bei Mineralöldestillaten unterschiedlicher Herkunft, unterschiedlicher Zusammensetzung und unterschiedlichen Siedeverhaltens.

Grundsätzlich können die erfindungsgemäßen Copolymerisate als Fließverbesserer sowohl in Rohölen als auch in den durch Destillation gewonnenen Weiterverarbeitungsprodukten des Rohöls eingesetzt werden. Bevorzugt ist jedoch ihre Verwendung in Mineralöldestillaten, insbesondere Mineralölmitteldestillaten. Hierunter werden Kohlenwasserstofffraktionen verstanden, die zwischen 150 und 400°C sieden. Beispiele für derartige Rohöldestillate sind Petroleum, leichte Heizöle und Dieselkraftstoff. Von besonderer Bedeutung sind Mitteldestillate wie Heizöl EL und Dieselkraftstoff.

Als Fließverbesserer besonders bewährt haben sich Copolymerisate, die 90 bis 65 Gew.-% Ethylen-Einheiten und 10 bis 35 Gew.-% Methoxiessigsäurevinylester-Einheiten enthalten.

Neben der Zusammensetzung ist wesentliches Kriterium der neuen Copolymerisate die mittlere Molmasse ($M_n$). Sie wird im Dampfphasenosmometer unter Verwendung von Toluol als Lösungsmittel gemessen und beträgt 500 bis 10.000 g . $Mol^{-1}$. Als Fließverbesserer werden bevorzugt Copolymerisate mit einer mittleren Molmasse von 1000 bis 5000 g x $Mol^{-1}$ eingesetzt.

Zur Herstellung der erfindungsgemäßen Copolymerisate aus Ethylen und Methoxiessigsäurevinylester geht man von Gemischen der Monomeren aus. Methoxiessigsäurevinylester ist eine farblose Flüssigkeit, die beispielsweie durch Einleiten von Acetylen in Methoxiessigsäure in Gegenwart von Quecksilberoxid, Bortrifluorid und wasserfreiem Fluorwasserstoff erhalten werden kann (DE-PS 604 640, 1933). Die Polymerisation der Ausgangsstoffe erfolgt nach bekannten Verfahren (vgl. hierzu z.B. Ullmans Encyclopädie der Technischen Chemie, 4. Auflage, Bd. 19, Seiten 169 bis 178) in Gegenwart von Initiatoren wie Sauerstoff und/oder Peroxiden. Die Umsetzung der Monomeren erfolgt bei Drücken oberhalb 50 MPa und bei Temperaturen zwischen 100 und 350°C. Die mittlere Molmasse der Copolymerisate wird durch Variation der Reaktionsparameter Druck und Temperatur bei gegebener Zusammensetzung des Monomerengemisches eingestellt. Da Methoxiessigsäurevinylester selbst als Molmassenregler wirkt, können die erfindungsgemäßen Copolymerisate mit hohen Comonomeranteilen ohne Zusatz eines weiteren Molmassenreglers erhalten werden. Zur Synthese von Copolymeren mit niedrigem Comonomergehalt, d.h. mit einem Anteil von weniger als etwa 15 Gew.-% und zur Synthese von Copolymeren mit niedriger Molmasse, d.h. weniger als etwa 1500 g/mol, ist die zusätzliche Verwendung von Molmassenreglern, wie Kohlenwasserstoffe, Aldehyde oder Ketone erforderlich. Sie werden in einer Menge von 0,05 bis 10 Gew.-%, bezogen auf das Monomerengemisch, angewendet. Ein besonders geeigneter Molmassenregler ist Propionaldehyd. Um Polymerisate der beanspruchten Zusammensetzung zu erhalten, setzt man Monomerengemische ein, die 95 bis 50 Gew.-% Ethylen und 5 bis 50 Gew.-% Methoxiessigsäurevinylester enthalten. Die Polymerisate fallen als farblose Schmelzen an, die bei Raumtemperatur zu wachsartigen Feststoffen erstarren.

Die Polymerisation wird in bekannten Hochdruckreaktoren, z.B. Autoklaven oder Rohrreaktoren, durchgeführt. Lösungsmittel können im Reaktionsgemisch enthalten sein, wenngleich sich die lösungsmittelfreie Arbeitsweise besonders bewährt hat. Bevorzugt führt man die Polymerisation in Rohrreaktoren durch.

Die erfindungsgemäßen Copolymerisate werden Mineralöldestillaten üblicherweise in Form von Lösungen, die 40 bis 60 Gew.-% (bezogen auf die Lösung) Copolymerisat enthalten, zugesetzt. Als Lösungsmittel geeignet sind aliphatische oder aromatische Kohlenwasserstoffe oder Kohlenwasserstoffgemische, z.B. Benzinfraktionen und insbesondere Kerosin. Durch die neuen polymeren Verbindungen in ihren rheologischen Eigenschaften verbesserte Mineralöldestillate enthalten 0,001 bis 2, vorzugsweise 0,005 bis 0,5 Gew.-% Copolymerisat, bezogen auf das Destillat. Das Copolymerisat kann allein oder auch zusammen mit anderen Additiven verwendet werden, beispielsweise mit Entwachsungshilfsmitteln, Korrosionsinhibitoren, Antioxidantien oder Schlamminhibitoren. Ebenso ist es möglich, Gemische der erfindungsgemäßen Copolymerisate einzusetzen, deren Komponenten sich hinsichtlich ihrer Zusammensetzung und/oder ihrer mittleren Molmasse unterscheiden.

Die Herstellung der neuen Copolymerisate und ihre Eigenschaften werden in den nachfolgenden Beispielen 1 bis 7 beschrieben. Weitere Beispiele A bis G betreffen die Verwendung der neuen Copolymerisate als Additive für Mineralöldestillate. Selbstverständlich ist nicht beabsichtigt, die Erfindung auf die hier beschriebenen speziellen Ausführungsformen zu beschränken.

Beispiele 1 bis 7: Herstellung von Ethylen-Methoxiessigsäurevinylester-Copolymerisaten

Ethylen und Methoxiessigsäurevinylester werden, gegebenenfalls unter Zusatz von Propanal als Molmassenregler, in einem Autoklaven polymerisiert. Hierzu wird das Monomerengemisch, dem als Initiator tert.-Butylperoxipivalat gelöst in einer Benzinfraktion zugesetzt worden ist, unter Reaktionsdruck in den Reaktor eingespeist. Die Verweilzeit der Reaktanten im Autoklaven beträgt etwa 80 sec.

In der nachfolgenden Tabelle 1 sind die Polymerisationsbedingungen und die Eigenschaften der erhaltenen Copolymerisate zusammengestellt.

Der Methoxiessigsäurevinylester-Gehalt der Copolymerisate wird durch H-NMR-Spektroskopie bestimmt, ihre Viskosität bei 140°C mit einem Rotovisco System MV II (Hersteller: Fa. Haake, Karlsruhe) gemessen.

**Tabelle 1**

**Synthese von Ethylen-Methoxiessigsäurevinylester-Copolymerisaten**

| Reaktions-bedingungen | B e i s p i e l e | | | | | | |
|---|---|---|---|---|---|---|---|
| | 1 | 2 | 3 | 4 | 5 | 6 | 7 |
| Reaktionsdruck (MPa) | 150 | 150 | 150 | 200 | 200 | 200 | 200 |
| Reaktionstemp. (°C) | 230 | 230 | 230 | 160 | 160 | 160 | 160 |
| Initiatoreinsatz (Gew.ppm)[1] | 156 | 266 | 2419 | 135 | 100 | 134 | 131 |
| Zusammensetzung des Reaktionsge-misches (Gew.%) | | | | | | | |
| Ethylen | 89,4 | 81,9 | 71,7 | 72,3 | 76,1 | 71,3 | 70,1 |
| MOEVE[2] | 9,2 | 18,1 | 28,3 | 27,7 | 23,9 | 27,3 | 26,9 |
| Propanal | 1,4 | – | – | – | – | 1,4 | 3,0 |
| Umsatz (%)[3] | 15,6 | 16,8 | 21,9 | 14,4 | 8,5 | 9,8 | 9,8 |
| Kennzeichnung d.Polymerisate | B e i s p i e l e | | | | | | |
| | 1 | 2 | 3 | 4 | 5 | 6 | 7 |
| MOEVE (Gew.%) | 11,4 | 19,7 | 28,3 | 31,8 | 28,1 | 31,5 | 31,3 |
| Viskosität b. 140°C (mPa.s) | 260 | 200 | 80 | 180 | 200 | 85 | 45 |
| $M_n$[4] (g.mol-1) | 2000 | 1850 | 1500 | 1800 | 1830 | 1510 | 1300 |

1) bezogen auf das Reaktionsgemisch
2) Methoxiessigsäurevinylester
3) bezogen auf Monomereneinsatz
4) bestimmt durch Dampfphasenosmometrie

Beispiele A - G: Wirksamkeit der Ethylen-Methoxiessigsäurevinylester-Copolymerisate als Mineralöladditive

In den folgenden Beispielen A - F wird die Wirksamkeit verschiedener Ethylen-Methoxiessigsäurevinylester-Copolymerisate als Additive für Mineralöle und Mineralöldestillate an Hand des CFPP-Tests (Kalt-Filter-Verstopfungspunkt-Test) beschrieben. Als Vergleich ist in Beispiel G die Wirksamkeit eines Ethylen-Vinylacetat-Copolymeren wiedergegeben. Die Durchführung des Tests erfolgt nach DIN 51428; sie ist auch in J. of the Inst. of Petr., Bd. 52, Juni 1966, Seiten 173 bis 185 publiziert.

Zur Prüfung werden drei Mitteldestillate M1, M2 und M3 eingesetzt, die durch die in Tabelle 2 zusammengestellten Eigenschaften gekennzeichnet sind. Die Mitteldestillate M2 und M3 können als tiefgeschnittene Mitteldestillatfraktionen mit einem hohen Siedeende klassifiziert werden.

Die in Tabelle 3 zusammengefaßten Ergebnisse zeigen, daß die erfindungsgemäßen Copolymerisate gegenüber den allgemein gebräuchlichen Ethylen-Vinylacetat-Copolymerisaten ein deutlich verbesserte Wirksamkeit in Mitteldestillatfraktionen mit hohem Siedeende aufweisen. Zudem sind die erfindungsgemäßen Copolymerisate auch bei Anwendung in geringen Mengen in konentionellen Mitteldestillatfraktionen erkennbar effektiver als die bekannten Additive.

## Tabelle 2
## Charakteristik der Mitteldestillate

| | | M 1 | M 2 | M 3 |
|---|---|---|---|---|
| Siedeanalyse | (°C) | | | |
| Siedeanfang | | 175 | 163 | 162 |
| 5 % | | 196 | 194 | 196 |
| 50 % | | 296 | 273 | 274 |
| 90 % | | 363 | 375 | 367 |
| Siedeende | | 264 | 385 | 382 |
| Pourpoint | (°C) | -12 | -9 | -6 |
| CFPP-Wert | (°C) | - 3 | -1 | -1 |
| Gehalt an n-Paraffinen (gaschromatografisch) | (%) | 30,5 | 36,4 | 24,8 |

Tabelle 3

| Wirksamkeit der erfindungsgemäßen Ethylen-Methoxiessigsäurevinylester-Copolymerisate | | | | | |
|---|---|---|---|---|---|
| Beispiel | Polymerisat | | CFPP-Wert (°C) | | |
| | aus Beispiel | Konzentration in (ppm) | M 1 | M 2 | M 3 |
| A | 2 | 25 | - 9 | - | - |
| | | 50 | -10 | - | - |
| | | 100 | -13 | - | - 8 |
| | | 200 | -15 | -7 | - |
| B | 3 | 25 | -10 | - | - |
| | | 50 | -13 | + 2 | - 1 |
| | | 100 | - | - | - |
| | | 200 | - | - | - |
| C | 4 | 25 | -11 | - | - |
| | | 50 | -13 | - | - |
| | | 100 | -15 | - | - 3 |
| | | 200 | -16 | -2 | - |
| D | 5 | 25 | -11 | - | - |
| | | 50 | -13 | - | - |
| | | 100 | -14 | - | -10 |
| | | 200 | -16 | - | - |
| E | 6 | 25 | -11 | - | - |
| | | 50 | -14 | - | - |
| | | 100 | -15 | - | - 3 |
| | | 200 | -18 | - | - 3 |
| F | 7 | 25 | -11 | - | - |
| | | 50 | -13 | - | - |
| | | 100 | -15 | - | - 2 |
| | | 200 | -18 | 0 | - 4 |
| G | EVA-Copolymer | 25 | - 6 | - | - |
| | | 50 | -11 | 2 | - 1 |
| | | 100 | -15 | 2 | - 1 |
| | | 200 | - | 1 | 0 |

**Patentansprüche**

1. Copolymerisate aus 95 bis 50 Gew.-% Ethylen-Einheiten und 5 bis 50 Gew.-% Methoxiessigsäurevinylester-Einheiten mit einer mittleren Molmasse ($M_n$) von 500 bis 10.000 g x $Mol^{-1}$.

2. Verfahren zur Herstellung der Copolymerisate nach Anspruch 1, dadurch gekennzeichnet, daß man Monomerengemische, die 95 bis 50 Gew.-% Ethylen und 5 bis 50 Gew.-% Methoxiessigsäurevinylester enthalten bei Drücken oberhalb 50 MPa und Temperaturen zwischen 100 und 350°C gegebenenfalls in Gegenwart von Initiatoren und gegebenenfalls Molmassenreglern polymerisiert.

3. Verfahren nach Anspruch 2, dadurch gekennzeichnet, daß als Molmassenregler Propionaldehyd eingesetzt wird.

4. Verwendung von Copolymerisaten nach Anspruch 1 zur Verbesserung der Fließfähigkeit von Mineralöldestillaten, insbesondere Mineralölmitteldestillaten.

5. Verwendung von Copolymerisaten nach Anspruch 4, die 90 bis 65 Gew.-% Ethylen-Einheiten und 10 bis 35 Gew.-% Methoxiessigsäurevinylester-Einheiten enthalten.

**6.** Verwendung von Copolymerisaten nach Anspruch 4 oder 5, dadurch gekennzeichnet, daß sie den Mineralöldestillaten in einer Menge von 0,001 bis 2, vorzugsweise 0,005 bis 0,5 Gew.-%, bezogen auf das Destillat, zugesetzt werden.

## Claims

**1.** Copolymers consisting of 95 to 50 wt.% of ethylene and 5 to 50 wt.% of methoxyacetic acid vinyl ester with an average molecular mass ($M_n$) of 500 to 10,000 g x mole$^{-1}$.

**2.** A process for the preparation of copolymers according to claim 1, characterised in that monomer mixtures containing 95 to 50 wt. % of ethylene and 5 to 50 wt.% of methoxyacetic acid vinyl ester are polymerised at pressures above 50 MPa and temperatures between 100 and 350°C, if necessary in the presence of initiators and if necessary molecular mass regulators.

**3.** A process according to claim 2, characterised in that propionaldehyde is used as a molecular mass regulator.

**4.** The use of copolymers according to claim 1 to improve the flowability of mineral oil distillates, in particular mineral oil middle distillates.

**5.** The use of copolymers according to claim 4 containing 90 to 65 wt.% of ethylene and 10 to 35 wt.% of methoxyacetic acid vinyl ester.

**6.** The use of copolymers according to claim 4 or 5, characterised in that they are added to the mineral oil distillates in amounts of 0.001 to 2, preferably 0.005 to 0.5 wt.%, related to the distillate.

## Revendications

**1.** Copolymères de 95 à 50 % en poids de motifs d'éthylène et 5 à 50 % en poids de motifs de méthoxyacétate de vinyle, d'une masse molaire moyenne ($M_n$) de 500 à 10 000 g.mol$^{-1}$.

**2.** Procédé pour la fabrication des copolymères selon la revendication 1, caractérisé en ce que l'on polymérise des mélanges de monomères qui contiennent 95 à 50 % en poids d'éthylène et 5 à 50 % en poids de méthoxyacétate de vinyle sous des pressions de plus de 50 MPa et à des températures comprises entre 100 et 350°C et éventuellement en présence d'inducteurs et éventuellement de régulateurs de masse molaire.

**3.** Procédé selon la revendication 2, caractérisé en ce que l'on utilise le propionaldéhyde comme régulateur de masse molaire.

**4.** Utilisation de copolymères selon la revendication 1 pour l'amélioration de la fluidité de distillats d'huiles minérales, en particulier de distillats moyens d'huiles minérales.

**5.** Utilisation selon la revendication 4 de copolymères qui contiennent 90 à 65 % en poids de motifs d'éthylène et 10 à 35 % en poids de motifs de méthoxyacétate de vinyle.

**6.** Utilisation de copolymères selon la revendication 4 ou 5, caractérisée en ce qu'ils sont ajoutés aux distillats d'huiles minérales en quantité de 0,001 à 2 % en poids par rapport aux distillats, de préférence de 0,005 à 0,5 % en poids.